# EUROPEAN PATENT APPLICATION

(11) **EP 4 609 688 A1**
(43) Date of publication of application: **03.09.2025**
(21) Application number: 24160877.7
(22) Date of filing: 01.03.2024
(51) Int. Cl.: A01C 7/08, A01C 15/00, A01B 39/18, A01B 49/06

(54) **A SUBSTRATE DISPENSING SYSTEM AND A METHOD FOR DISPENSING ONE OR MORE SUBSTRATES**

(71) Applicant: GST Denmark ApS, 6240 Løgumkloster (DK)
(72) Inventor: Gubi, Jacob, 6240 Løgumkloster (DK); Nørgaard, Henrik, 6240 Løgumkloster (DK)
(74) Representative: Patrade A/S

(57) **Abstract**

A substrate dispensing system (1) configured for being attached to the front of a vehicle (2) and comprising:
- a tank (10) for storing one or more spreadable substrates (3); and
- a substrate transport system (40) comprising a first transport channel (42i) in fluid communication with a first blower (41i) and a second transport channel (42ii) in fluid communication with a second blower (41ii), said first and said second blower is configured for respectively generating an air-volume flow (43) in said first and said second transport channels); and
wherein the tank further comprises:
- at least four feeders (30), wherein a first pair of feeders (31i, 32i) for feeding substrate into the first transport channel and a second pair of feeders (31ii, 32ii) for feeding substrate into the second transport channel; and
- a reconfigurable divider element (20) configured for dividing the tank (10) into at least two separate tank chambers (15).

## Description

### Field of the Invention

The present invention relates to substrate dispensing system for dispensing one or more substrates onto a field via one or more distributor devices arranged downstream from the substrate dispensing system. The substrate dispensing system being connectable to a vehicle such as a tractor and preferable connected to the front of the vehicle.

### Background of the Invention

In the field of agriculture, there are various solutions used for dispensing one or more substrates such as grain or granulate or solid fertiliser or similar solid material onto a field while a vehicle pulls a tool bar with tools acting on the field.

Some of these solutions utilise a feeder to feed one or more substrates stored in a tank into a channel, wherein an airflow generated by a feeder forces the one or more substrates through the channel directly onto a field or more commonly to one or more distributor devices such that the distribution devices can divide the substrate flow even more for the purpose of evening out the distribution onto the field.

WO2023174481A1 describes such a solution. The solution utilises an air distribution device designed as a cylindrical housing with a rotary slide valve arranged therein, which is set up to change an outlet cross section of the air outlets to manipulate airflow and hence substrate flow. However, this will make the solution very sensitive to minor constrictions anywhere along the several channels for distributing substrates, thereby the solutions become less precise over time unless there is periodic check for constrictions.

The need for precision during distribution onto a field is ever increasing, since distribution of too much or too little grain or granulate or solid fertiliser will either increase costs and/or reduce yield.

Thus, there is a need for a substrate dispensing system with a higher precision.

It will be a further positive gain if said substrate dispensing system can be used in as many different setups as possible, while achieving the same precision, since this would reduce the need for further equipment and allow for a more flexible operation.

### Object of the Invention

One objective of the present disclosure is to achieve a substrate dispensing system overcoming the limitations of the prior art.

### Description of the Invention

One objective of the invention is achieved by a substrate dispensing system configured for being attached to the front of a vehicle.

The dispensing system comprises:
- a tank for storing one or more spreadable substrates; and
- a substrate transport system comprising a first transport channel in fluid communication with a first blower and a second transport channel in fluid communication with a second blower, the first and said second blower is configured for respectively generating an air-volume flow in the first and the second transport channels.

The tank further comprises:
- at least four feeders, wherein a first pair of feeders is for feeding substrate into the first transport channel and a second pair of feeders is for feeding substrate into the second transport channel; and
- a reconfigurable divider element configured for dividing the tank into at least two separate tank chambers.

The substrate dispensing system may be arranged to the front of a vehicle such as a truck, a tractor, or other types of farming vehicles or vehicles configured for driving farming equipment. The substrate dispensing system can be attached to other parts of the vehicle, however the vehicle will typically be dragging an agricultural tool acting on the soil and attachment to the front of the vehicle will typically result in the best weight distribution.

An advantage of arranging the substrate dispensing system to the front of the vehicle is achieving a better weight distribution in use when the vehicle is processing fields.

The spreadable substrate may be grain or granulate or solid fertilizer. The term spreadable substrate may be used interchangeably with substrate.

The tank chambers may store any combination of:
- variations of the same type of substrate;
- different types of substrate;
- same type and variation of substrate.

Each transport channel in the substrate transport system may be configured for transporting one or more substrates from the feeder to a distribution unit. The distribution unit may be configured for spreading the substrate on a field above or below the ground. The transport channel may be a tube such as a flexible tube.

The substrate transport system is not limited to comprising only the first and the second transport channels and first and second blowers, and thus, the substrate transport system may comprise any number of channel blowers.

The different types of substrates or different mixes of substrates may require being transported to the distribution unit at different speeds to adjust the flow rate. Additionally, some types of substrates or different mixes of substrates may have different densities and require different air-volume flows to be transported at a specific flow rate.

An advantage of each transport channel being in fluid communication with a blower, is achieving a substrate transport system having an individual air-volume flow in each transport channel which is not affected by constrictions in other transport channels. Consequently, it is possible to adjust the speed of which the substrate in each channel is transported to a distribution unit for further distribution.

A vehicle may drag a tool bar with a left side group of distribution units and a right side group of distribution units. The left side group of distribution units may comprise one or more distribution units and the right side group of distribution units may comprise one or more distribution units. The two transport channels may respectively be connected to said right side group of distribution units and left side group of distribution units, thereby by controlling the airflow of respective blowers the amount distributed can be different for the left and right side, which is needed when the vehicle moves along a line where the field has different properties or needs with regards to fertilizing and/or grain and/or granulate.

Feeders can be driven mechanically via a wheel in contact with the soil during use, the wheel being mechanically connected to the feeders such as via an endless band or endless chain.

In one embodiment, the feeders may be arranged in a lower most position in the tank, such that gravity may assist in feeding the one or more substrates from the tank to the substrate transport system. A part of the first transport channel and a part of the second transport channel may be arranged below the tank.

In another embodiment, the feeders may be arranged in any position in the tank. A part of the first transport channel and a part of the second transport channel may be arranged substantially below an output of the feeders.

The divider elements may have different shapes such as, but not limited too:
- elongated panels,
- having substantial cross shape or V-shape when seen from above,
- being curved or angled,
- comprising slits for intersecting two divider elements.

An advantage is achieved by having different divider elements as the options for reconfiguring the tank using the divider elements.

A further advantage is achieved by the divider elements being releasably attached to the tank, as worn out or broken divider element can be easily removed and replaced or repaired.

In an aspect of the invention, the substrate dispensing system may comprise operational states of:
- a non-mixed state, wherein the tank may comprise the two tank chambers and the pairs of feeders may be separated by the divider element into the two tank chambers,
- a mix state, wherein the tank may comprise the two tank chambers and the first pair of feeders may be separated by the divider element into each of the two tank chambers and the second pair of feeders may be separated by divider element into each of the two tank chambers.

The operational state of the substrate dispensing system may be controlled by reconfiguring the divider element.

The divider element may be a set of divider elements.

Dividing the tank into two tank chambers as exemplified in the non-mix state and the mix state are merely to be construed as an example. In the case of the tank comprising additional feeders, the divider element or sets of divider elements may be reconfigured accordingly to achieve additional tank chambers. The tank could have three tank sections including additional feeders, such that in the mix state three different substrates are feed into the respective channels.

Reconfiguring the divider element may comprise:
- remounting a divider element to increase or decrease the size of each chamber; and/or
- replacing a divider element either with an element having a different shape or with an element to change the operational state of the substrate dispensing system; and/or
- adding a divider element to achieve tank chambers with different shapes and/or sizes, or to achieve more tank chambers; and/or
- removing a divider element to achieve tank chambers with different shapes and/or sizes, or to achieve less tank chambers.

In the non-mixed state, the two tank chambers may comprise the same substrate or different types and/or variations of substrate, such as a granulate and a fertilizer. The first pair of feeders may feed one type and/or variation of substrate to the first transport channel, while the second pair of feeders may feed another type and/or variation of substrate to the second transport channel.

As the first and the second transport channel are in fluid communication with the first and second blower respectively, it is possible to adjust the air-volume flow in each transport channel individually. By adjusting the air-volume flow individually, it is possible to accommodate the distribution requirement for each type and/or variation of substrate based on the density, desired distribution flow rate, speed of the vehicle and amount of surface area for receiving the spreadable substrate.

In the mixed state, the two tank chambers may also comprise the same substrate or different types and/or variations of substrate, such as a granulate and a fertilizer. The first pair of feeders may feed substrate from each tank chamber to the first transport channel, while the second pair of feeders may feed substrate from each tank chamber to the second transport channel. Consequently, the substrate from each of the two tank chambers is mixed as it reaches transport channel.

A disadvantage of premixed substrates is that part of the mix tends to create sediments causing an uncontrollable and unintended ratio of the premixed substrate. An advantage of mixing the substrates as it reaches the transport channel is ensuring that both types of substrates are continuously mixed in a controlled manner throughout.

The substrate transport system may achieve different operational modes of distribution output:
- a double string mode being the default, wherein each transport channel is separated and configured for delivering the substrate to individual outputs,
- a single string mode, wherein two transport channels are combined to a single transport channel using a connector such as a Y-connector arranged downstream from the last feeders,
- multiply string mode, wherein at least one transport channel is split into at least two transport channels using a connector such as a reversed Y-connector arranged downstream from the last feeders.

In an aspect of the invention, the substrate dispensing system may comprise further operational states of:
- a four-channel mix state, wherein the tank may comprise the four tank chambers and the feeders may be separated by the divider element into the four tank chambers, and/or
- a T-chamber mix state, wherein the tank may comprise the three tank chambers and a feeder from each pair of feeders may be positioned in one tank chamber and the other feeders from each pair of feeders may be positioned in each of the two other tank chambers.

The operational state of the substrate dispensing system may be controlled by reconfiguring the divider element.

The divider element may be a set of divider elements.

Dividing the tank into three and four tank chambers as exemplified in the four-channel mix state and the T-chamber mix state are merely to be construed as examples. In the case of the tank comprising additional feeders, the divider element or sets of divider elements may be reconfigured accordingly to achieve additional tank chambers.

In the four-channel mix state, the four tank chambers may comprise the same substrate or different types and/or variations of substrate, such as a granulate and a fertilizer. The first pair of feeders may feed substrate from two tank chambers to the first transport channel, while the second pair of feeders may feed substrates from the other two tanks to the second transport channel.

In the T-chamber mixed state, the three tank chambers may also comprise the same substrate or different types and/or variations of substrate, such as a granulate and a fertilizer. The first pair of feeders may feed substrate from one single tank chamber and one joint tank chamber to the first transport channel, while the second pair of feeders may feed substrate from another single tank chamber and the joint tank chamber to the second transport channel. Consequently, the substrate from each of the two singular tank chambers are mixed with the joint tank chamber as it reaches transport channel.

An advantage of reconfiguring the divider element, is great customizability in terms of achieving:
- a variety of different mixes of substrates,
- individual distribution flow rate,
- ratio of tank chambers,
- number of tank chambers.

Thus, the same substrate dispensing system may be used for a variety of different purposes and is suitable for different fields and crops.

In an aspect of the invention, each feeder may comprise a motor controlling a feed flow from the tank to the respective the transport channels.

An advantage of each feeder comprising a motor is controlling the mixing ratio by differentiating the feed flow of substrates from two tank chambers. As each feeder in a feeding pair is individually controlled, one feeder may have a smaller feed flow rate than the other feeder and thus contribute with less substrate to be mixed in the transport channel.

When a limited amount of substrate is needed for a substrate mix, the space requirement for that substrate is equally limited.

The size and capacity of the tank influences the weight, spreading efficiency, and range of the vehicle. Consequently, the size ratio between the tank chambers may influence the overall efficiency, as unused space in the tank champers and tank chambers not being emptied at the same time.

An additional advantage of controlling the feed rate for each feeder is compensating for a smaller tank chamber and thus minimizing the discrepancy between the rate of which the tank chambers of different sizes are emptied.

In an aspect of the invention, each feeder comprises:
- a metering wheel with cavities; or
- an auger.

The metering wheel may have a length of 20 cm or more. The length of the metering wheel may be complementary to a length of the feeder. The length of the metering wheel may determine the maximum feed flow rate.

The metering wheel may be interchangeable to achieve easy replacement or repairing of the metering wheel. Additionally, easy replacement may comprise replacing the metering wheel with a metering wheel having a different size or having cavities of a different sizes and/or a different number of cavities.

An advantage of the feeder comprising an auger is achieving a feeder that does not require gravity assist in feeding substrate to the transport channels. Consequently, there are more options in terms of arranging the feeder and the transport channels within the substrate distribution system.

In an aspect of the invention, the substrate dispensing system may comprise a controller configured for controlling said first and said second blower, and optionally, for controlling the motors of the feeders.

The skilled person would know that controlling the air-volume flows generated respectively by the first and second blower make it possible to adjust the flow rate of substrates transported in the each of the two transport channels. Adjusting the air-volume flow further makes it possible to account for different types and variations of substrate in the tank.

Controlling the motors of the feeders, herein the speed, achieves additional means of optimizing the operation of the substrate dispensing system.

In an embodiment, the controller may control the first and second blower, and optionally the motors of the feeder, based the configuration of one or more divider elements and the types and/or variations of substrate in the tank chambers.

Reconfiguring the divider element may cause the controller to change the air-volume flow, and optionally the feed flow, accordingly.

In an aspect of the invention, the controller may be further configured to control said first and said second blower and optionally the motors based on field data and geo-positioning.

A field will almost always have different zones requiring different amounts of distributed substrates. The different zones may be due to national law in cases of fertilizer close to waterways or due to different soil types or for other reasons. Today, many vehicles used in agriculture have some means such as GPS for determining the geo-positioning. The controller may be adapted to utilise such geo-positioning data along with field data which is typically stored in a computer readable format to control the flow of substrate such that the field will receive the amount of substrate that is required, thereby decreasing costs or increasing yield of the field.

In an aspect of the invention, the tank may comprise two or more of the following:
- at least two divider elements defining three or more tank chambers;
- a lid structure covering a tank opening;
- a grate structure arranged substantially above the feeders;
- one or more tank walls being substantially funnel-shaped towards the feeders.

An advantage of the tank comprising more divider elements and thereby more tank chambers, is achieving more options in terms of customizing the layout of the tank chambers.

The divider elements may have different shapes and a tank may comprise multiple divider elements having the same shape, a different shape, or any combination thereof.

The divider element may be tiltable or be configured for being arranged in a tilted position within the tank.

An advantage of the tank comprising the lid structure is protecting the substrates in the tank and giving access to filling and refilling the substrate in each tank chamber.

An advantage of the tank comprising the grate is separating clumps in the substrate. Additionally, stones may have entered the tank, or the substrate may comprise stones, that risk blocking the feeder. The grate may block stones larger than a predetermined size from entering the feeder.

The tank may comprise a grate for each feeder or be configured for receiving a divider wall. The funnel shape may ensure that all the substrate from each tank chamber can enter the feeders with the assistance of gravity.

The funnel shaped inner tank walls may have an angle of at least 23 degrees relative to a horizontal plane.

The tank may comprise one or more agitators for stirring up the substrate in the tank chambers.

In an aspect of the invention, the divider element may be a first divider element comprising a first part hinged with a second part.

The first part may be releasably attached to the tank in a fixed position.

The first part may be releasably attached to the tank using attachment means such as, but not limited to, bolts, clamps, locking mechanisms such as latches, sliding groves for slidingly receiving a peripheral edge of the divider element, magnets, etc.

The second part may be tilted relative to the first part within a predetermined range and be releasably attached to the tank in a position within that range.

An advantage of the first divider element being hinged is achieving a tank wherein the volume ratio between at least two tank chambers can easily be adjusted. As an example, if the volume ratio of two tank chambers is 50/50 when the second part is arranged in a substantially vertical position, the volume ratio may be 40/60, 25/75, or 45/55 when the second part is arranged in the tilted position.

An advantage of the first divider element being hinged is achieving a tank wherein the second part may be in a tilted position while the first part may be in a more vertical position. An advantage of only the second part being in a tilted position is achieving greater flexibility in where the divider element can be arranged. This is especially beneficial when dividing the tank where two feeders are arranged closely together and where tilting the entire divider would risk obstructing the substrate from entering the feeder. This is also beneficial where a raised part is arranged separating each pair of feeders which may otherwise have limited the range of the tilt. The raised part may be arranged on a plateau with angled walls defining a funnel wall in the appertaining tank chambers.

In an aspect of the invention, the divider element may be a second divider element comprising a receiving face with a shape complementary to an engagement face in the tank, wherein the receiving face is configured for being rotational connected to the engagement face for adjusting the volume ratio between at least two tank chambers.

The second divider element may be releasably attached to the tank using attachment means such as, but not limited to, bolts, clamps, locking mechanisms such as latched, sliding groves for slidingly receiving a peripheral edge of the divider element, magnets, etc.

The second divider element may be tiltable within a predetermined range and be releasably attached to the tank in a position within that range.

An advantage of the second divider element being tiltable is achieving a tank wherein the volume ratio between at least two tank chambers can easily be adjusted. As an example, if the volume ratio of two tank chambers is 50/50 when the second divider element is arranged in a first angular position, the volume ratio may be 40/60, 25/75, or 45/55 when the second divider element is tilted to a second angular position.

The tank engagement face may be an elongated attachment face such as a flange, groove, or cylinder.

The tank engagement face may be arranged on a raised part within the tank.

The receiving face of the second divider element may have a shape complementary to the elongated flange, such as comprising a groove, a flange, or a cylindrical shell.

When the receiving face engages the engagement face, the second divider element may rotate about the engagement face.

An advantage of the receiving face and the engagement face being rotational connected achieves both a sufficient separation between two or more tank chambers and controlling the second divider element when being tilted.

In an aspect of the invention, the divider element may comprise an extendable part configured for extending the height of the divider element.

An advantage of the divider element being extendable is the ability to arrange the divider element in multiple different positions. Additionally, some types of substrates may require additional height to ensure the substrates are not mixed unintentionally.

In an embodiment, the extendable part may be configured for extending the length of the divider element. Extending the length of the divider element may ensure that the divider element can be arranged in the tank in multiple different ways.

A further advantage of the extendable is achieved when the dividing element or part of the dividing element, for instance the second part of the first divider element or the second divider element, is movable within a predetermined tilting range. Depending on the angular position of the divider element or part of the divider element, the height of the divider element may need to be extended to sufficiently separate the substrate from neighbouring tank chambers to prevent cross contamination.

In the case of the first divider element, the second part may comprise the extendable part.

In an aspect of the invention, the tank may comprise a plurality of tank mounting faces configured for releasably attaching one or more divider elements in the tank.

The tank mounting faces may be protrusions with apertures for releasably attaching the divider elements using clamps, locking mechanisms such as a latch, or nuts and bolts.

The tank mounting faces may be arranged on an inner side of the tank.

The tank mounting faces may be sliding groves for slidingly receiving a peripheral edge of the divider element.

In an embodiment, the divider elements may comprise one or more tank mounting faces configured for releasably attaching to one or more other divider elements.

In an aspect of the invention, the tank may comprise at least one angular adjustment unit comprising two or more plate mounting faces positioned with an angle,
wherein a first plate mounting face is configured for releasably attach the divider element in a first angular position inside the tank, and second plate mounting face is configured for attaching the divider element in a second angular position inside the tank, and
wherein the divider element is configured for being tilted between the two or more plate mounting faces to adjust the volume ratio between at least two tank chambers.

An advantage of the tank comprising at least one angular adjustment unit is achieving tank chambers with easily reconfigurable volume ratios. Additionally, by allowing both the volume ratio of the tank chambers and number of tank chambers to be configured fast and easy, a modular tank customizable for changing need is achieved.

A further advantage is achieved by the angular adjustment unit and the first divider element and/or the second divider element and/or an extendable part. The changing needs of the user may be accommodated by buying different divider elements and thereby further extending the options for reconfiguring the tank without having to replace the whole tank.

The angular adjustment unit may be arranged such that when attached, the receiving face of the second divider element engages the tank engagement face defining an attachment point between two tank chambers.

The angular adjustment unit may be arranged on an inner side of the tank.

The plate mounting faces may be protrusions with apertures for releasably attaching the divider elements using nuts and bolts.

The plate mounting face may comprise attachment means such as, but not limited to, bolts, clamps, locking mechanisms such as latches, sliding groves for slidingly receiving a peripheral edge of the divider element, magnets, etc.

The divider elements may be releasably attached to the plate mounting faces by using the same type of attachment as the tank mounting faces.

The divider elements may be releasably attached to the plate mounting faces by using a different type of attachment than the tank mounting faces.

The angular adjustment unit may comprise more than two plate mounting faces, such as 3, 4, 5, 6, 7, or 8 positions, thereby increasing the number of predetermined positions the divider element can be attached in.

The tank may comprise more than one angular adjustment unit, preferably an even number such as 2, 4, 6, 8, or 10.

Preferably, the angular adjustment units may be arranged in pairs arranged on opposing tank sides.

An objective of the invention is achieved by a vehicle comprising:
- the substrate dispensing system according to any of the preceding claims, wherein the substrate dispensing system is arranged on the front of the vehicle; and
- at least one distribution unit and preferably two or more distribution unit.

It is preferably two or more distribution units such that the effect of the first transport channel and the second first transport channel can be utilized by for example adjusting air flow individually. Thereby, the distribution of substrates can be controlled in zones and different zones can receive different amounts. In the embodiments with two distribution units the zones can be a left zone and right zone, however there can be more zones by increasing the number of distribution units.

The vehicle may comprise a rotary hoe unit for working a soil surface of a field. The rotary hoe unit may include a tool bar which may be foldable or non-foldable. The rotary hoe unit includes a plurality of rotary hoes. The rotary hoe unit may be a standard and well-known rotary hoe unit.

An objective of the invention is achieved by a method for integrating grain and a soil improving substrate into a field, the method comprising steps of
- providing a vehicle comprising a substrate dispensing system according to claim 2 and optionally anyone of claims 3 to 13, a rotary hoe unit, the first transport channel and the second transport channel being connected to respective distribution units, each distribution unit being adapted for delivering substrate along part of the rotary hoe, wherein the substrate dispensing system is in the mix state and one tank chamber contain grain and one tank chamber contain a soil improving substrate,
- working a soil surface of a field by displacing the rotary hoe unit, while performing steps of
   - feeding the grain and the soil improving substrate into the first transport channel and the second transport channel;
   - dispensing the grain and the soil improving substrate from each distribution unit at the rotary hoe unit and/or in front of the rotary hoe unit,
thereby integrating the seed and the soil improving substrate into the field.

The soil improving substrate may be solid fertilizer or bacterial cultures in granulate form. The substrate dispensing system may comprise additional tank chambers with different granulates such as additional solid fertilizer.

The substrate dispensing system in the mix state combined with the rotary hoe is a particular advantage embodiment as the rotary hoe will work the soil and integrate the seed and soil improving substrate into the field. If the soil improving substrate is solid fertilizer then the resulting loss due to evaporation or rain will be reduced significantly.

Furthermore, the step of feeding can include controlling the feeders individually as previously described such that the amount of grain and/or soil improving substrate such as solid fertilizer can be varied across the field. Solid fertilizer is expensive, and a field can nearly always be divided into zones requiring different levels of solid fertilizer. The present invention can change the amount dispensed by controlling the feeders. Thereby reducing costs and environmental impact.

### Description of the Drawings

Various examples are described hereinafter with reference to the figures. The reference numerals refer to the elements throughout. The elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
- Fig. 1: illustrates the substrate dispensing system seen from the front and the side;
- Fig. 2: illustrates the substrate dispensing system seen from the top and in perspective;
- Fig. 3: illustrates a cross section of the substrate dispensing system taken along section A-A in figure 1A;
- Fig. 4: illustrates a cross section of the substrate dispensing system taken along section B-B in figure 1A;
- Fig. 5: illustrates a cross section of the substrate dispensing system taken along section C-C in figure 1A;
- Fig. 6: illustrates a cross section of the substrate dispensing system taken along section C-C in figure 1B;
- Fig. 7: illustrates a perspective view of the substrate dispensing system and divider elements;
- Fig. 8: illustrates the tank of the substrate dispensing system;
- Fig. 9: illustrates the operational states of the substrate dispensing system;
- Fig. 10: illustrates additional operational states of the substrate dispensing system; and
- Fig. 11: illustrates a vehicle comprising the substrate dispensing system.

### Detailed Description of the Invention

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidically connected" or "communicatively connected" to the other element with one or more intervening elements interposed there between.

The terminology used herein is for the purpose of describing particular examples only and is not intended to be limiting. As used herein, the terms "comprises", "comprising", "includes" and/or "including" when used in this specification specifies the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly defined in the present specification.

| No. | Item |
|---|---|
| 1 | Substrate dispensing system |
| 2 | Vehicle |
| 3 | Spreadable substrate |
| 10 | Tank |
| 11 | Tank opening |
| 12 | Lid structure |
| 13 | Grate structure |
| 14 | Tank engagement face |
| 15 | Tank chambers |
| 16 | Tank mounting face |
| 17 | Angular adjustment unit |
| 18a, 18b | First and second angular position |
| 19 | Plate mounting face |
| 20 | Divider element |
| 20i,20ii | First and second divider element |
| 21a,21b | First and second hinged part |
| 22 | Receiving face |
| 30 | Feeder |
| 31i,32i | First pair of feeders |
| 31 ii,32ii | Second pair of feeders |
| 33 | Feed flow |
| 34 | Motor |
| 35 | Metering wheel |
| 36 | Cavities |
| 40 | Substrate transport system |
| 41 | Blower |
| 42 | Transport channels |
| 43 | Air-volume flow |
| 50 | Rotary hoe unit |

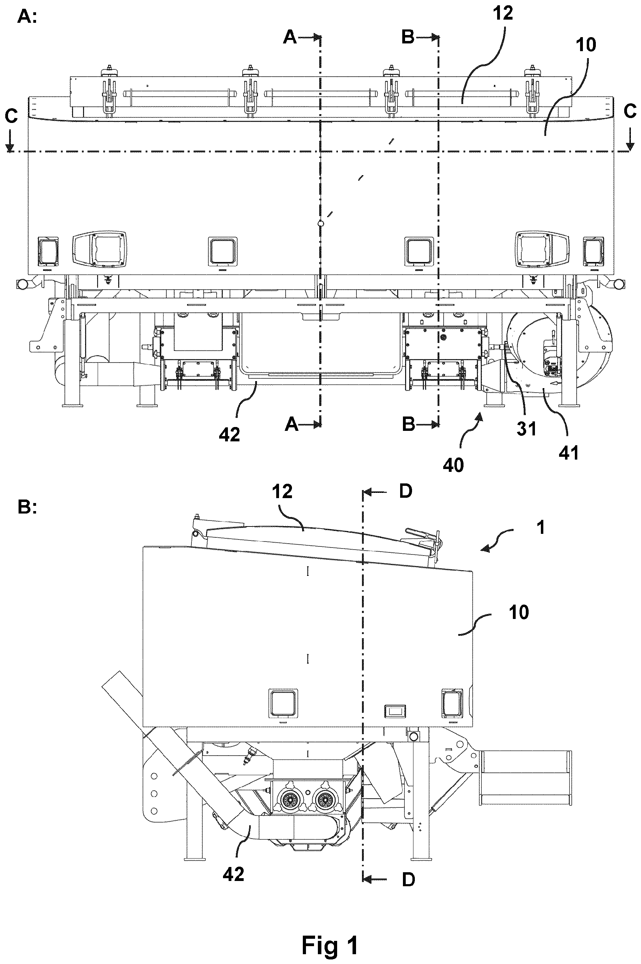

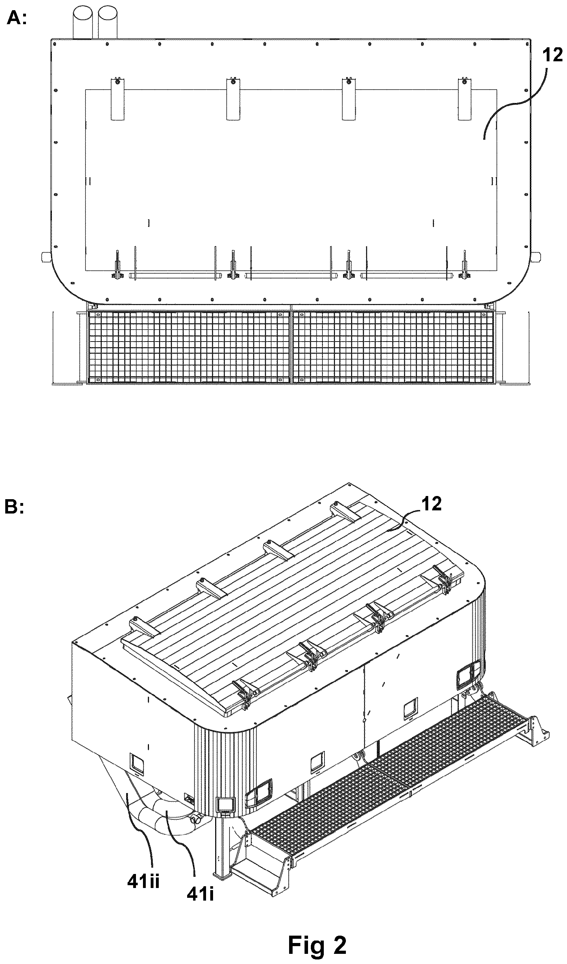

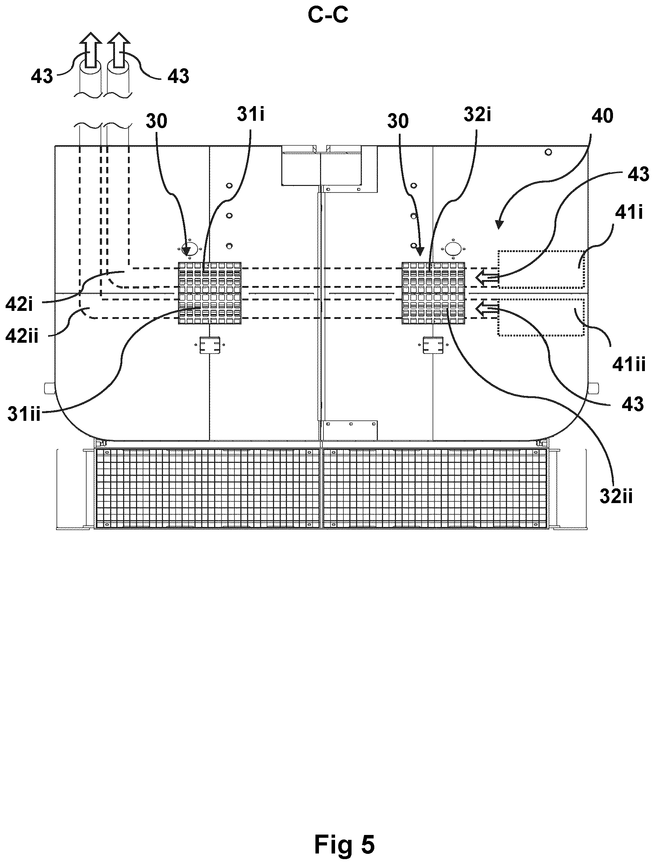

Figures 1-6 discloses the substrate dispensing system 1 configured for being attached to the front of a vehicle 2.

The dispensing system 1 comprises a tank 10 for storing one or more spreadable substrates 3 such as grain or granulate or solid fertiliser.

The dispensing system 1 comprises a substrate transport system 40 comprising a first transport channel 42i in fluid communication with a first blower 41i and a second transport channel 42ii in fluid communication with a second blower 41 ii. The first blower 41i is configured for generating an air-volume flow 43 in the first transport channel 42i. The second blower 41ii is configured for generating an air-volume flow 43 in the second transport channel 42ii.

The tank 10 further comprises at least four feeders 30. A first pair of feeders 31i,32i for feeding substrate into the first transport channel 42i and a second pair of feeders 31ii,32ii for feeding substrate into the second transport channel 42ii.

The tank 10 further comprises a reconfigurable divider element 20 configured for dividing the tank 10 into at least two separate tank chambers 15.

The tank 10 further comprises a lid structure 12 covering a tank opening 11.

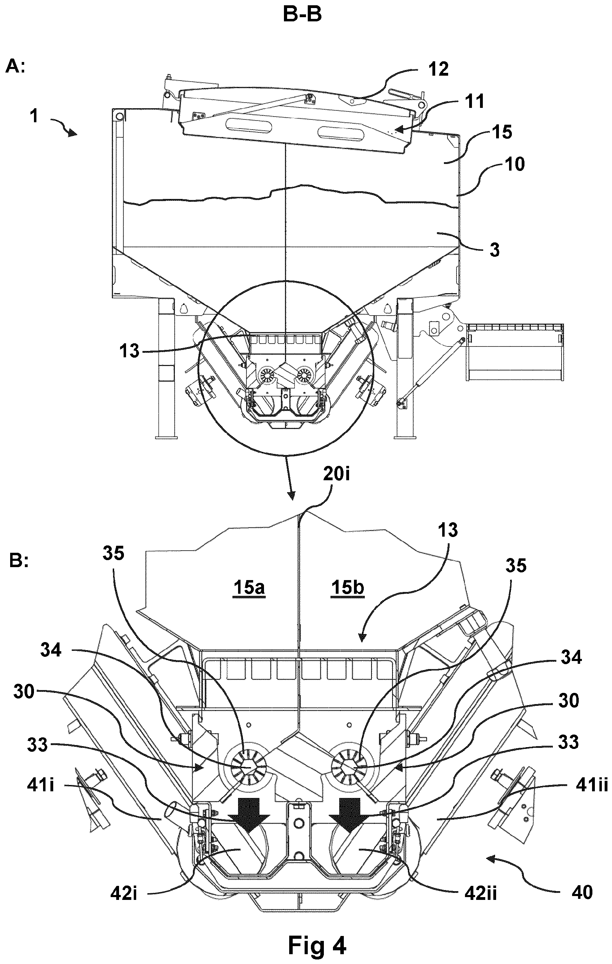

The tank 10 further comprises a grate structure 13 arranged substantially above the feeders 30, see figure 4B. The figure further illustrates an embodiment of the grate 13 configured for receiving the divider element 20.

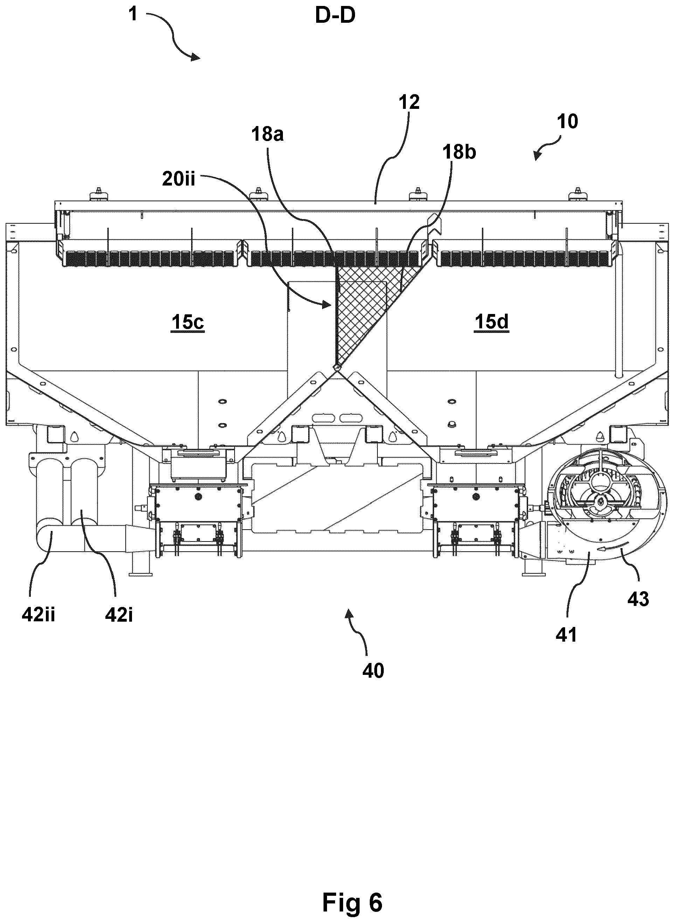

As illustrated in figures 4 and 6, the tank 10 is substantially funnel-shaped towards the feeders 30.

In the illustrated embodiments, each feeder 30 comprises a motor 34 for controlling a feed flow 33 from the tank to the respective transport channels 42i,42ii.

In the illustrated embodiments and as best shown in figure 4B, each feeder 30 comprises a metering wheel 35 with cavities 36.

In another embodiment (not illustrated), the feeder 30 comprises an auger. Using an auger may increase the number of placement options when arranging the feeder and the transport channels within the substrate distribution system.

The substrate dispensing system 1 may comprise a controller configured for controlling the first blower 41i and the second blower 41ii. The controller is further configured for controlling the motors of the feeders 30.

The controller is further configured to control the first blower 41i and the said second blower 41ii, and optionally the motors 34, based on field data and geo-positioning.

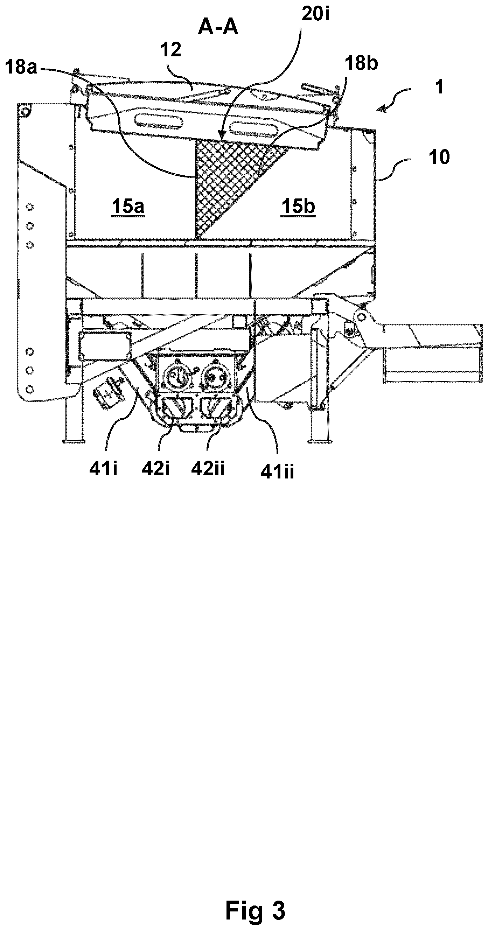

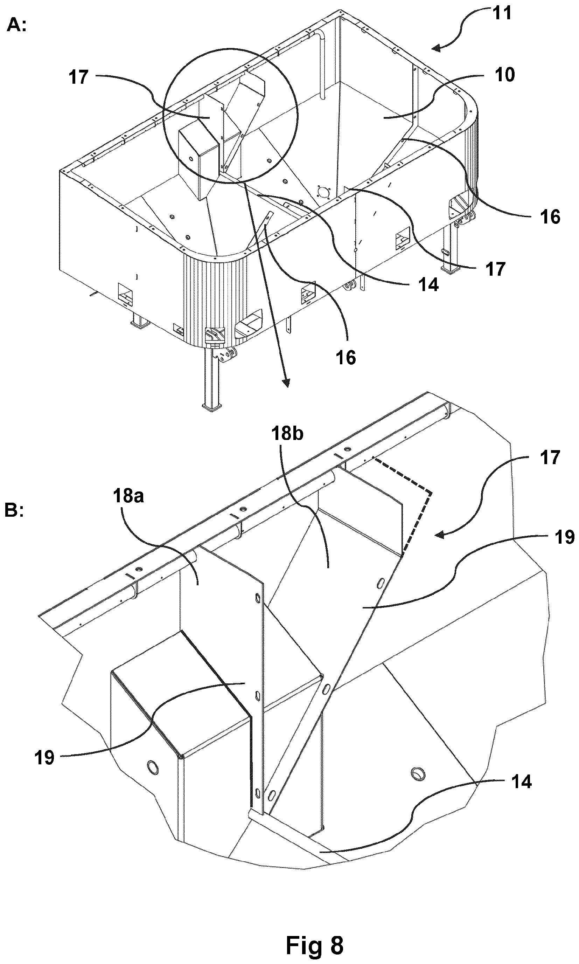

The hashed part in figures 3 and 6 discloses the increase in volume of one tank chamber 15 relative to the other tank chamber 15 by reconfiguring the divider element 20. This is shown in greater detail in figure 8.

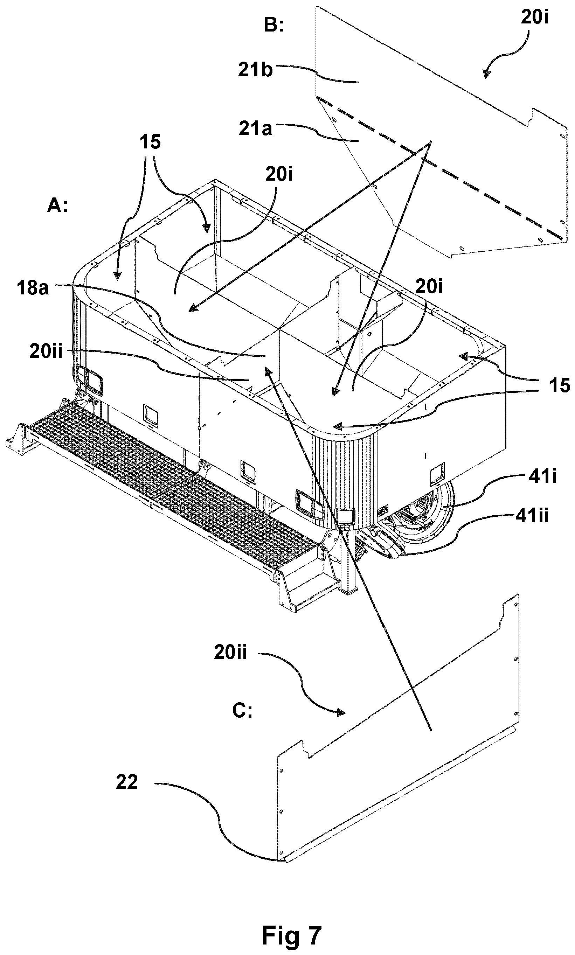

Figure 7 illustrates the inside of the tank 10 comprising three divider elements 20 separating the tank into four tank chambers 15. In the illustrated embodiment, the two divider elements 20i, separating the first pair of feeders 31i,32i from the second pair of feeders 31ii,32ii, is one type of divider element 20, see figure 7B. The single divider element 20ii separating each pair of feeders 31i,32ii and 31ii,32ii, is another type of divider element 20, see figure 7C.

As illustrated by the dashed line in figure 7B and in figure 3, the divider element 20 may be a first divider element 20i comprising a first part 21a hinged with a second part 21b. As the divider element is dividing the tank where two feeders, one from each feeder pair 31i,32i and 31ii,32ii are arranged closely together, tilting the entire divider would risk obstructing the substrate from entering the feeder. Additionally, as the tank comprises a raised part the hinge is arranged above to ensure the desired tilt can be achieved.

As illustrated in figure 7C and in figure 6, the divider element 20 may be a second divider element 20ii comprising a receiving face 22 configured for engaging a tank engagement face 14 in the tank. The receiving face 22 is rotational connected to the engagement face 14 for adjusting the volume ratio between tank chambers 15.

The tank engagement face 14 is arranged on a raised part defining an angled wall in the tank chambers 15.

The divider element may also comprise an extendable part for extending the height of the divider element (not illustrated). The first divider element 20i and/or the second divider element 20ii may comprise the extendable part.

In alternative embodiments, the tank 10 may comprise:
- one divider element to achieve four tank chambers, e.g. defining a cross when seen from above;
- one divider element to achieve three tank chambers, e.g. defining a T-shape when seen from above;
- two divider elements to achieve four tank chambers, e.g. two V-shapes when seen from above or being two dividing elements crossing using for instance slits;
- two divider elements to achieve three tank chambers, e.g. two divider elements intersecting.

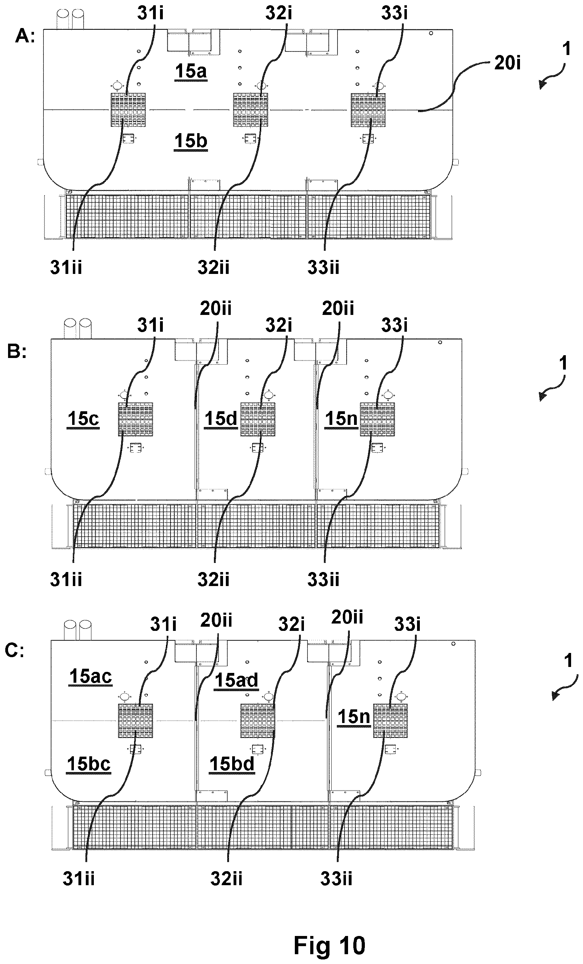

As exemplified in figure 10, the tank 10 may comprise multiple divider elements of different types and variations to achieve any number of tank chambers 15.

As best seen in figures 3 and 6, one or more of the divider elements 20 may be adjustable to make it possible to adjust the relationship between the chamber volume of the at least two tank chambers 15. The divider element 20 may adjust the chamber volume ratio by means such as extending the divider element or tilting the divider element.

As illustrated in figure 8A, the tank 10 comprises multiple tank mounting faces 16 configured for releasably attaching a divider element 20 to the tank 10. The tank mounting faces 16 may be protrusions with apertures for bolting the divider elements 20.

In other embodiments (not illustrated) the tank mounting faces 16 may be sliding groves for slidingly receiving a peripheral edge of the divider element 20.

As illustrated in figure 8B, the tank 10 comprises at two angular adjustment units 17 (one is mostly hidden by a side of the tank). Each of the angular adjustment units 17 comprise two plate mounting faces 19 positioned with an angle.

The first plate mounting face 19 is configured for releasably attach the divider element 20 in a first angular position 18a inside the tank 10. The second plate mounting face 19 is configured for attaching the divider element 20 in a second angular position 18b inside the tank 10.

The divider element 20 can be tilted between the two plate mounting faces 19 and be releasably attached to either of them to adjust the volume ratio between the tank chambers 15 defined by the divider elements 20.

The angular adjustment units 17 are arranged on two opposing sides in the tank 10 extending into the tank. The plate mounting faces 19 may comprise apertures for bolting the divider elements 20.

In other embodiments (not illustrated) the plate mounting face may be sliding groves for slidingly receiving a peripheral edge of the divider element 20.

Figures 3 and 6 illustrates a divider element 20 wherein the tilting range is hatched between the first angular position 18a and the second angular position 18b. Figure 7 illustrates the divider element releasably attached to the angular adjustment unit 17 in the first angular position 18a.

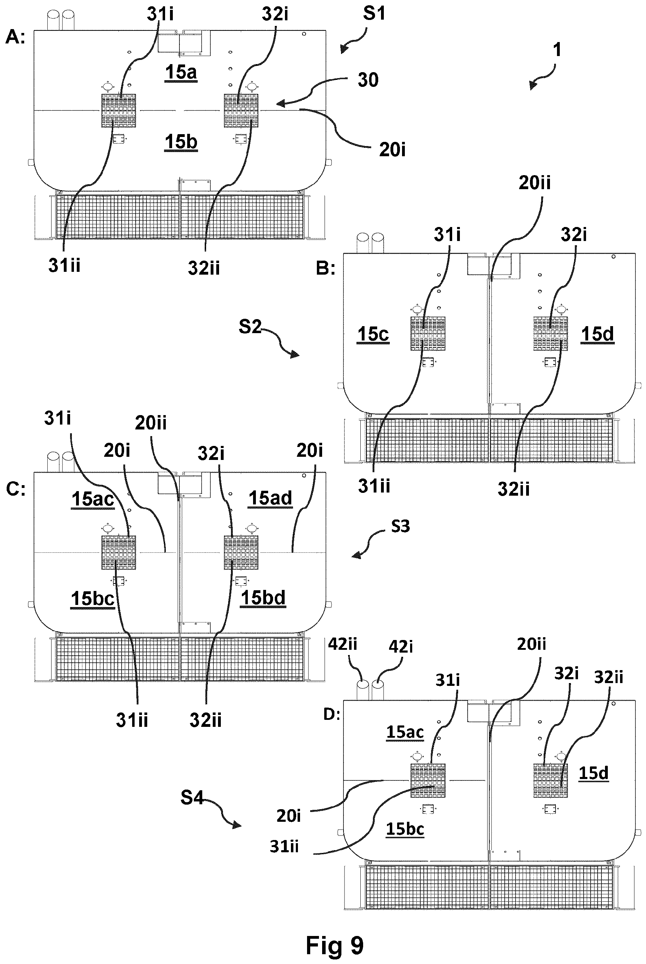

Figures 9 and 10 discloses the different operational stages of the substrate dispensing system 1, wherein the operational state of the substrate dispensing system 1 is controlled by reconfiguring the divider element 20.

Figure 9A illustrates the substrate dispensing system 1 in a non-mixed state S1. In the illustrated embodiment, the tank 10 comprises the two tank chambers 15 and two pairs of feeders 31i,32i and 31ii,32ii are separated by the divider element 20 into the two tank chambers 15a,15b. A variation of the non-mix state S1 is illustrated in figure 10A, wherein each pair of feeders comprise an additional feeder 33i,33ii.

Figure 9B illustrates the substrate dispensing system 1 in a mix state S2. As illustrated the tank 10 comprises the two tank chambers 15 and the first pair of feeders 31i,32i are separated by the divider element 20 into each of the two tank chambers 15c, 15d and the second pair of feeders 31ii,32ii are separated by divider element 20 into each of the two tank chambers 15c,15d. A variation of the mix state S2 is illustrated in figure 10B, wherein each pair of feeders comprise an additional feeder 33i,33ii.

Figure 9C illustrates the substrate dispensing system 1 in a four-channel mix state S3. As illustrated, the tank comprises the four tank chambers 15ac, 15ad, 15bc, 15bd and the feeders 30 are separated by the divider element 20 into the four tank chambers 15ac,15ad,15bc,15bd.

Figure 9D illustrates the substrate dispensing system 1 in a T-chamber mix state S4. In the illustrated embodiment, the tank comprises the three tank chambers 15ac,15bc,15d. A feeder 30 from each pair of feeders 32i,32ii are positioned in one tank chamber 15d and the two other feeders 30, one from each pair of feeders 31i,31ii, are positioned in each of the two other tank chambers 15ac, 15bc.

A variation of the four-channel mix state S3 and the T-chamber mix state S4 is illustrated in figure 10C, wherein each pair of feeders comprise an additional feeder 33i,33ii.

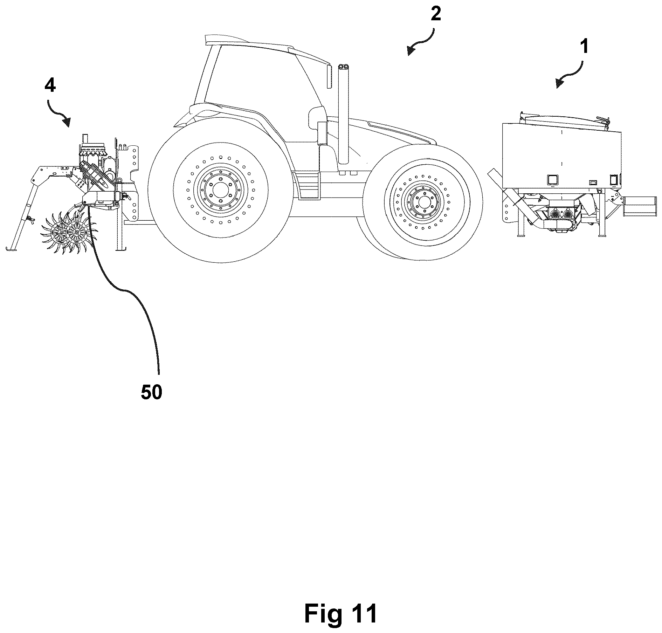

Figure 11 illustrates a vehicle 2 comprising the substrate dispensing system 1 and at least one distribution unit 4 and preferably two distribution units 4, wherein the one or more distribution units 4 are positioned on or at a rotary hoe unit 50 comprising a plurality of rotary hoes. The figure is basic illustrations as transport channels are not shown to be connected to the one or more distribution units 4 as would be the case during use. Furthermore, during use the substrate dispensing system 1 may be connected to the front of the vehicle 2, this connection is not shown in the figure.

The substrate dispensing system 1 is in most embodiments connected to the front of the vehicle 2 to achieve a better weight distribution.

## Claims

1. A substrate dispensing system (1) configured for being attached to the front of a vehicle (2), the dispensing system (1) comprises:
- a tank (10) for storing one or more spreadable substrates (3); and
- a substrate transport system (40) comprising a first transport channel (42i) in fluid communication with a first blower (41i) and a second transport channel (42ii) in fluid communication with a second blower (41ii), said first and said second blower (41i,41ii) is configured for respectively generating an air-volume flow (43) in said first and said second transport channels (42i,42ii); and
wherein the tank (10) further comprises:
- at least four feeders (30), wherein a first pair of feeders (31i,32i) for feeding substrate into the first transport channel (42i) and a second pair of feeders (31ii,32ii) for feeding substrate into the second transport channel (42ii); and
- a reconfigurable divider element (20) configured for dividing the tank (10) into at least two separate tank chambers (15).

2. The substrate dispensing system (1) according to claim 1, wherein the substrate dispensing system (1) comprises operational states of:
- a non-mixed state (S1), wherein the tank comprises the two tank chambers (15) and the pairs of feeders (31i,32i,31ii,32ii) are separated by the divider element (20) into the two tank chambers (15a, 15b),
- a mix state (S2), wherein the tank (10) comprises the two tank chambers (15) and the first pair of feeders (31i,32i) are separated by the divider element (20) into each of the two tank chambers (15c, 15d) and the second pair of feeders (31ii,32ii) are separated by divider element (20) into each of the two tank chambers (1515c,15d),
wherein the operational state of the substrate dispensing system (1) is controlled by reconfiguring the divider element (20).

3. The substrate dispensing system (1) according to claim 2, wherein the substrate dispensing system (1) comprises further operational states of:
- a four channel mix state (S3), wherein the tank comprises the four tank chambers (15ac, 15ad, 15bc, 15bd) and the feeders (30) are separated by the divider element (20) into the four tank chambers (15ac, 15ad, 15bc, 15bd), and/or
- a T-chamber mix state (S4), wherein the tank comprises the three tank chambers (15ac,15bc,15d) and a feeder (30) from each pair of feeders (32i,32ii) are positioned in one tank chamber (15d) and the two other feeders (30), one from each pair of feeders (31i,31ii) are positioned in each of the two other tank chambers (15ac, 15bc),
wherein the operational state of the substrate dispensing system (1) is controlled by reconfiguring the divider element (20).

4. The substrate dispensing system (1) according to any of claims 1 to 3, wherein each feeder (30) comprises a motor (34) controlling a feed flow (33) from the tank to the respective transport channels (42i,42ii).

5. The substrate dispensing system (1) according to any of claims 1 to 4, wherein each feeder (30) comprises:
- a metering wheel (35) with cavities (36); or
- an auger.

6. The substrate dispensing system (1) according to any of claims 1 to 5, wherein the substrate dispensing system (1) comprises a controller configured for controlling said first and said second blower (41i,41ii) and optionally for controlling the motors of the feeders (30).

7. The substrate dispensing system (1) according to claim 6, wherein the controller is further configured to control said first and said second blower (41i,41ii) and optionally the motors (34) based on field data and geo-positioning.

8. The substrate dispensing system (1) according to any of claims 1 to 7, wherein the tank (10) comprises one or more of the following:
- at least two divider elements (20) defining three or more tank chambers (15);
- a lid structure (12) covering a tank opening (11);
- a grate structure (13) arranged substantially above the feeders (30);
- one or more tank walls being substantially funnel-shaped towards the feeders (30).

9. The substrate dispensing system (1) according to any of the preceding claims, wherein the divider element (20) is a first divider element (20i) comprising a first part (21a) hinged with a second part (21b).

10. The substrate dispensing system (1) according to any of the preceding claims, wherein the divider element (20) is a second divider element (20ii) comprising a receiving face (22) with a shape complementary to an engagement face (14) in the tank (10), wherein the receiving face (22) is configured for being rotational connected to the engagement face (14) for adjusting the volume ratio between at least two tank chambers (15).

11. The substrate dispensing system (1) according to any of the preceding claims, wherein the divider element (20) comprises an extendable part configured for extending the height of the divider element (20).

12. The substrate dispensing system (1) according to any of the preceding claims, wherein the tank (10) comprises a plurality of tank mounting faces (16) configured for releasably attaching one or more divider elements (20) in the tank (10).

13. The substrate dispensing system (1) according to any of the preceding claims, wherein the tank (10) comprises at least one angular adjustment unit (17) comprising two or more plate mounting faces (19) positioned with an angle,
wherein a first plate mounting face (19) is configured to releasably attach the divider element (20) in a first angular position (18a) inside the tank (10), and second plate mounting face (19) is configured for attaching the divider element (20) in a second angular position (18b) inside the tank (10), and
wherein the divider element (20) is configured for being tilted between the two or more plate mounting faces (19) to adjust the volume ratio between at least two tank chambers (15).

14. A vehicle (2) comprising:
- a substrate dispensing system (1) according to any of the preceding claims, wherein the substrate dispensing system (1) is arranged on the front of the vehicle and
- at least one distribution unit (4) and preferably two or more distribution units (4).

15. A method for integrating grain and solid fertiliser and optionally other soil improving substrates into a field, the method comprising steps of
- providing a vehicle (2) comprising a substrate dispensing system (1) according to claim 2 and optionally anyone of claims 3 to 13, a rotary hoe unit (50), the first transport channel (42i) and the second transport channel (42ii) being connected to respective distribution units (4), each distribution unit (4) being adapted for delivering substrate along part of the rotary hoe (50), wherein the substrate dispensing system (1) is in the mix state (S2) and one tank chamber (15) contains grain and one tank chamber (15) contains solid fertiliser,
- working a soil surface of a field by displacing the rotary hoe unit (50), while performing steps of
- feeding the grain and the solid fertiliser into the first transport channel (42i) and the second transport channel (42ii);
- dispensing the grain and the solid fertiliser from each distribution unit (4) at the rotary hoe unit (50) and/or in front of the rotary hoe unit (50),
thereby integrating the seed and the solid fertiliser into the field.
